# EUROPEAN PATENT APPLICATION

(11) **EP 2 506 123 A1**
(43) Date of publication of application: **03.10.2012**
(21) Application number: 10832658.8
(22) Date of filing: 25.11.2010
(51) Int. Cl.: G06F 3/033, G06F 3/038

(54) **DATA CARD**

(30) Priority: 26.11.2009 CN 200920270224 U
(71) Applicant: Huawei Device Co., Ltd., Longgang District Shenzhen Guangdong 518129 (CN)
(72) Inventor: CHEN, Qinna, Shenzhen Guangdong 518129 (CN); HAO, Huaqi, Shenzhen Guangdong 518129 (CN); ZHANG, Bin, Shenzhen Guangdong 518129 (CN); LI, Du, Shenzhen Guangdong 518129 (CN); XIE, Guifu, Shenzhen Guangdong 518129 (CN)
(74) Representative: Maiwald Patentanwalts GmbH
(86) International application number: PCT/CN2010/079102
(87) International publication number: WO 2011/063751

(57) **Abstract**

Embodiments of the present utility model disclose a data card, and relate to the field of electronic technologies, which solves a technical problem that an existing data card has a single function and does not have a wireless mouse function. The data card specifically includes an apparatus body, a plug, and a cap that is capable of being plugged into the plug, where the cap is disposed with a mouse module and a mouse power supply, and the apparatus body is disposed with a receiving module. The mouse module is configured to sense and calculate a moving distance of a spatial position of the cap, convert the calculated moving distance of the spatial position of the cap into an instruction for moving computer cursor position, and then send the instruction for moving the computer cursor position to the receiving module; and the receiving module is electrically connected to the plug and is configured to receive the instruction for moving the computer cursor position, input the instruction for moving the computer cursor position into a chip of a computer through the plug and a slot, and control a position of a cursor on a computer screen through the chip of the computer.

## Description

This application claims priority to Chinese Patent Application No. 200920270224.9, filed with the Chinese Patent Office on November 26, 2009 and entitled "ELECTRONIC DEVICE WITH PLUG", which is incorporated herein by reference in its entirety.

### FIELD OF THE UTILITY MODEL

The present utility model relates to the electronic field, and in particular, to a data card.

### BACKGROUND OF THE UTILITY MODEL

With gradual development of electronic technologies, a personal computer (referred to as "computer") enters thousands of households, and becomes one of the most common household appliances for people.

Currently, a data card (that is, a wireless modem), a USB disk and a removable hard disk are all common electronic apparatuses that are disposed with plugs and used in conjunction with the computer. When a plug of the data card is plugged into an adapted slot on the computer, the data card may access the Internet through a wireless signal, so as to implement communication between a chip of the computer and the Internet.

A mouse is an important device of the computer, and is configured to control a position of a cursor on a computer screen. The cursor may be quickly moved to a required position by using the mouse, so as to complete selection or other relevant operations. A data line is used to connect the mouse and the computer, but the data line is unsightly and a length of the data line is limited, so that an available space of the mouse is limited. Therefore, people think of setting a wireless mouse.

An existing wireless mouse includes a mouse casing, a mouse module, and a receiving module that is disposed with a plug. The plug on the receiving module is capable of being plugged into an adapted slot on the computer. The mouse module is disposed inside the mouse casing, and is configured to sense and calculate a moving distance of a spatial position of the mouse casing, convert the calculated moving distance of the spatial position of the mouse casing into an instruction for moving a computer cursor position, and then send the instruction for moving the computer cursor position to the receiving module through a wireless signal. The receiving module is configured to receive the instruction for moving the computer cursor position, input the instruction for moving the computer cursor position into the chip of the computer through the plug and the slot, and control a position of a cursor on the computer screen through the chip of the computer. When holding the mouse casing, people may control the position of the cursor by changing the spatial position of the mouse casing.

In the implementation of the present utility model, the prior art has at least the following problems.

An existing data card does not have a wireless mouse function, the function is single, and the data card and the wireless mouse are two separate apparatuses. Meanwhile, the function of the wireless mouse is also single, and the wireless mouse does not have the function of the data card. However, since a user often needs to use the functions of the wireless mouse and the data card, the user has to carry the two apparatuses at the same time, and since the sizes of the two apparatuses are generally small, it is inconvenient for carrying the two separate apparatuses at the same time.

### SUMMARY OF THE UTILITY MODEL

Embodiments of the present utility model provide a data card, which solves a technical problem that an existing data card has a single function and does not have a wireless mouse function.

In order to achieve the foregoing objective, the embodiments of the present utility model adopt the following technical solutions.

The data card includes an apparatus body, a plug fixedly connected to the apparatus body, and a cap capable of being plugged into the plug, where the cap is disposed with a mouse module and a mouse power supply for supplying power for the mouse module, and the apparatus body is disposed with a receiving module.

The plug is capable of being plugged into an adapted slot on the computer, and the plug is electrically connected to a chip of the computer through the slot.

The mouse module is configured to sense and calculate a moving distance of a spatial position of the cap, convert the calculated moving distance of the spatial position of the cap into an instruction for moving a computer cursor position, and then send the instruction for moving the computer cursor position to the receiving module.

The receiving module is electrically connected to the plug, and is configured to receive the instruction for moving the computer cursor position, input the instruction for moving the computer cursor position into the chip of the computer through the plug and the slot, and control a position of a cursor on a computer screen through the chip of the computer.

Compared with the prior art, the foregoing technical solutions provided in the present utility model have the following advantages.

The mouse module in the data card provided in the embodiments of the present utility model may sense and calculate the moving distance of the spatial position of the cap, and convert the moving distance into the instruction for moving the computer cursor position, and the receiving module may further input the instruction for moving the computer cursor position into the chip of the computer, and control the position of the cursor on the computer screen through the chip of the computer, therefore, the spatial position of the cap may be manually changed, and the position of the cursor on the computer screen is controlled through the change of the spatial position of the cap, thus implementing a function of a mouse.

Meanwhile, the mouse module is disposed on the cap, and the cap may be further plugged into the plug. When the cap is plugged into the plug, the cap may protect the plug. When the data card is used to control the position of the cursor on the computer screen, it is merely required to pull the cap out of the plug of the data card, and plug the plug into the adapted slot on the computer, and then, manually change the spatial position of the cap. After using the data card, the cap is plugged back into the plug of the data card. Therefore, the cap and the apparatus body may be carried at the same time, so that the carrying is more convenient, and the two components are not easily lost, thus solving the technical problem that the existing data card has the single function and does not have the wireless mouse function.

### BRIEF DESCRIPTION OF THE DRAWINGS

To describe the technical solutions in the embodiments of the present utility model or in the prior art more clearly, the accompanying drawings required for describing the embodiments or the prior art are introduced briefly in the following. Apparently, the accompanying drawings in the following description are only some embodiments of the present utility model, and persons of ordinary skill in the art may also derive other drawings from these accompanying drawings without creative efforts.

FIG. 1 is a schematic diagram of a connection relation between a data card and a computer according to an embodiment of the present utility model;

FIG. 2 is a schematic diagram of a connection relation between a data card and a computer, and a connection relation between the data card and an external network according to an exemplary embodiment of the present utility model;

FIG. 3 is a schematic plane diagram of a cap in a data card according to an embodiment of the present utility model;

FIG. 4 is a schematic diagram of a process of plugging a plug of a data card and an apparatus body into a cap according to an embodiment of the present utility model;

FIG. 5 is a schematic plane diagram of the plug of the data card and the apparatus body that are plugged into the cap as shown in FIG. 4 according to an embodiment of the present utility model; and

FIG. 6 is a schematic plane diagram of a data card that is not plugged into the cap according to an embodiment of the present utility model.

### DETAILED DESCRIPTION OF THE EMBODIMENTS

The technical solutions in the embodiments of the present utility model are clearly and completely described in the following with reference to the accompanying drawings in the embodiments of the present utility model. Apparently, the embodiments to be described are only a part rather than all of the embodiments of the present utility model. Based on the embodiments of the present utility model, all other embodiments obtained by persons skilled in the art without creative efforts shall fall within the protection scope of the present utility model.

An embodiment of the present utility model provides a data card that is convenient for carrying and has abundant functions.

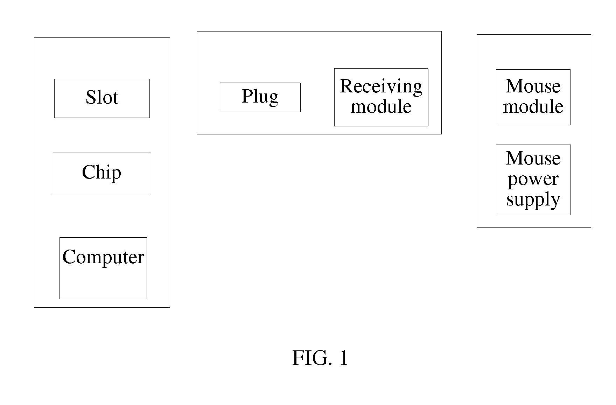

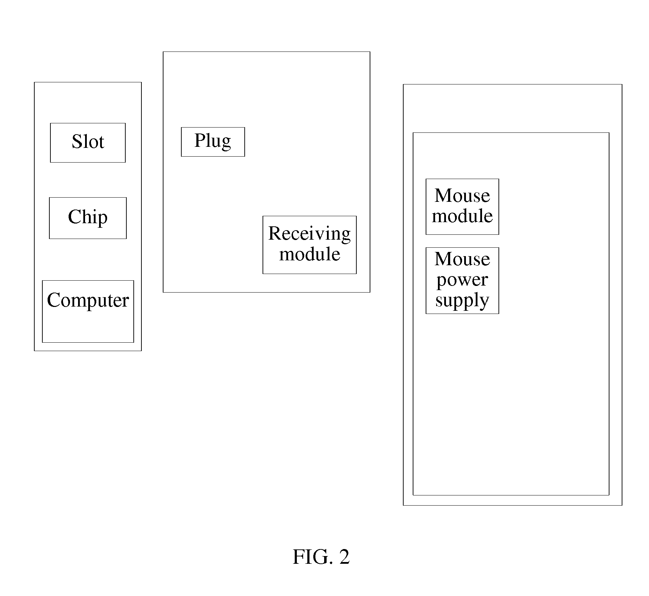

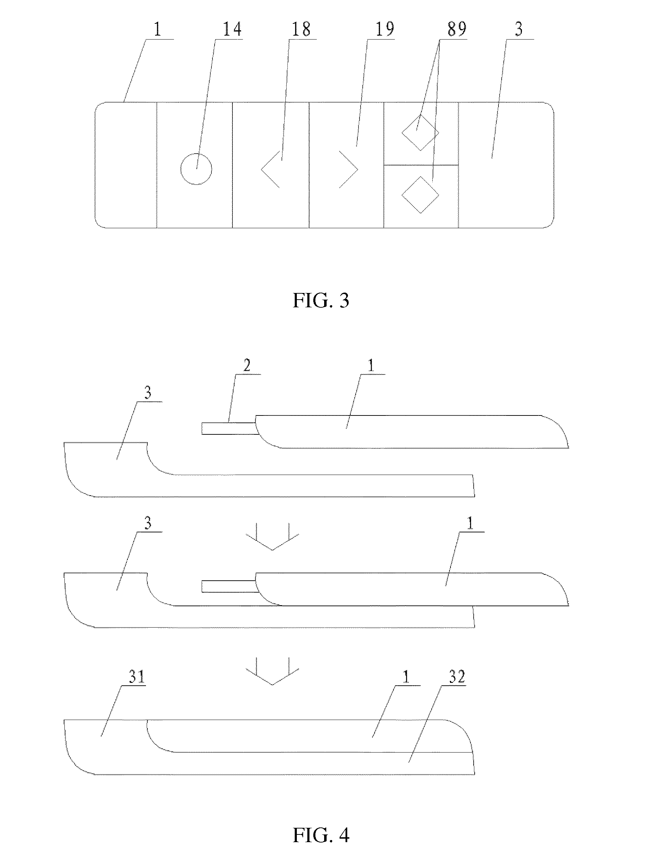

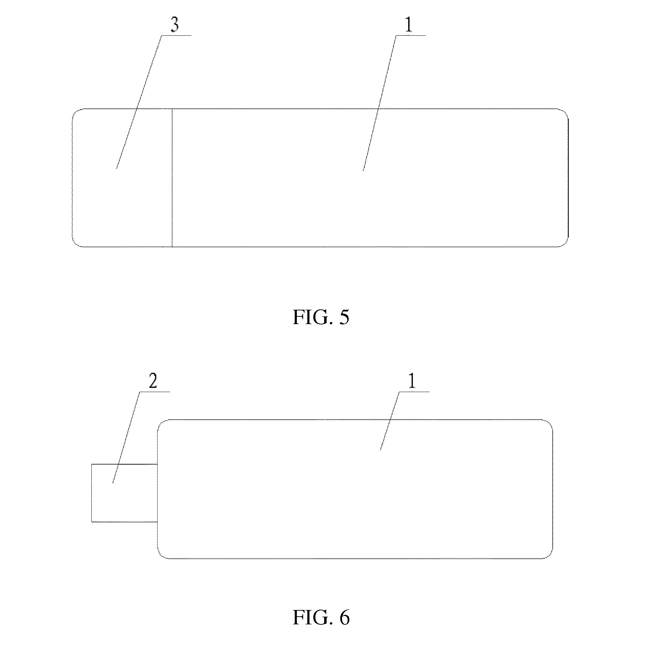

As shown in FIG. 1, the data card provided in this embodiment of the present utility model includes an apparatus body 1, a plug 2 as shown in FIG. 6, and a cap 3 as shown in FIG. 4 and FIG. 5 and capable of being plugged into the plug 2. A mouse module 4 and a mouse power supply 5 for supplying power for the mouse module 4 as shown in FIG. 1 and FIG. 2 are disposed on the cap 3, and a receiving module 6 is disposed on the apparatus body 1, where the plug 2 is capable of being plugged into an adapted slot 8 on a computer 7, and the plug 2 is electrically connected to a chip 9 of the computer 7 through the slot 8.

The mouse module 4 is configured to sense and calculate a moving distance of a spatial position of the cap 3, convert the calculated moving distance of the spatial position of the cap 3 into an instruction for moving a computer cursor position, and then send the instruction for moving the computer cursor position to the receiving module 6.

The receiving module 6 is electrically connected to the plug 2, and is configured to receive the instruction for moving the computer cursor position, input the instruction for moving the computer cursor position into the chip 9 of the computer 7 through the plug 2 and the slot 8, and control a position of a cursor on a computer screen 10 through the chip 9 of the computer 7.

The mouse module 4 in the data card provided in this embodiment of the present utility model may sense and calculate the moving distance of the spatial position of the cap 3, and then convert the moving distance into the instruction for moving the computer cursor position, and the receiving module 6 may further input the instruction for moving the computer cursor position into the chip 9 of the computer 7, and control the position of the cursor on the computer screen 10 through the chip 9 of the computer 7, therefore, the spatial position of the cap 3 may be manually changed, and the position of the cursor on the computer screen 10 is controlled through the change of the spatial position of the cap 3, thus implementing a function of a mouse.

Meanwhile, the mouse module 4 is disposed on the cap 3, and the cap 3 may be further plugged into the plug 2. When the cap 3 is plugged into the plug 2, the cap 3 may protect the plug 2. When the data card is used to control the position of the cursor on the computer screen 10, it is merely required to pull the cap 3 out of the plug 2 of the data card, and plug the plug 2 into the adapted slot 8 on the computer 7, and then, manually change the spatial position of the cap 3. After using the data card, the cap 3 is plugged back into the plug 2 of the data card. Therefore, the cap 3, the apparatus body 1 and the plug 2 may be carried at the same time, so that the carrying is more convenient, and each component is not easily lost, thus solving a technical problem that an existing data card has a single function and does not have a wireless mouse function.

In this embodiment, the mouse module 4 may be connected to the receiving module 6 through a data line, and at this time, the mouse module 4 may send the instruction for moving the computer cursor position to the receiving module 6 through the data line. The mouse module 4 may also be wirelessly connected to the receiving module 6, and at this time, the mouse module 4 may send the instruction for moving the computer cursor position to the receiving module 6 through a wireless signal. When the mouse module 4 sends the instruction for moving the computer cursor position to the receiving module 6 through the wireless signal, the cap 3 may be enabled to have a wireless mouse function. In this embodiment, a wireless connection manner may be specifically wireless connection manners such as Bluetooth and a WLAN.

As shown in FIG. 3, in this embodiment, the cap 3 is disposed with a left key 18 and a right key 19, where a function of the left key 18 is the same as a function of a left key 18 of a common mouse, and a function of the right key 19 is the same as a function of a right key 19 of the common mouse. Definitely, the cap 3 may be further disposed with other mouse devices that are similar to a scroll wheel and a mouse switch of the common mouse.

In this embodiment, the moving distance of the spatial position of the cap 3 is a distance of the cap 3 moving in any direction. In this design, a method for operating the cap 3 is similar to a method for operating an "air mouse" in the prior art, and this design greatly facilitates the user, so that a tabletop, a mouse pad or a touchpad does not need to be used when the data card is used to control the position of the cursor on the computer screen 10. The user holds the cap 3 and moves it in any direction to control the position of the cursor on the computer screen 10, and when the user uses a cursor to draw or write, the user may operate the cursor in a manner of operating a common pen for handwriting input.

Definitely, in this embodiment, the moving distance of the spatial position of the cap 3 may also be a moving distance of the cap 3 in a direction that is parallel to a horizontal plane. Under this circumstance, a tabletop or a mouse pad may be used by the cap 3 to place the cap 3 on the tabletop or the mouse pad, and then the position of the cursor may be controlled by moving the cap 3 on the tabletop or the mouse pad.

The cap 3 includes a cap header 31 and a cap body 32 that are fixedly connected to each other as shown in FIG. 4, where the cap header 31 is cylinder-shaped and may be plugged into the plug 2, the cap body 32 is hollow and a circuit board 33 is disposed inside the cap body 32 (not shown in FIG. 4), and the mouse module 4 is fixedly disposed on the circuit board 33 as shown in FIG. 1 and FIG. 2. The cap header 31 may protect the plug 2, and the cap body 32 may protect the circuit board 33 and the mouse module 4 on the circuit board 33. Meanwhile, it is convenient for the user to hold the cap 3.

In this embodiment, since the cap body 32 and the apparatus body 1 are similar in size, when the plug 2 is plugged into the cap header 31, the whole data card looks more compact and beautiful.

As shown in FIG. 2, the cap 3 is further disposed with a laser lamp 12 that is capable of emitting a parallel beam, a laser power supply 13 for supplying power for the laser lamp 12, and a switch 14 for controlling whether the laser lamp 12 is on or off. The setting of the laser lamp 12 extends the function of the cap 3, and this design may enable the cap 3 to have a function of a laser pointer for teaching or demonstration. The switch 14 may be set as a key similar to the left key 18 or the right key 19, and in this way, the design is more beautiful.

In this embodiment, the mouse power supply 5 and the laser power supply 13 may be the same power supply and may also be two different power supplies, and the mouse power supply 5 and the laser power supply 13 may both use a lithium battery or other types of batteries.

The plug 2 may be a PCMCIA (PERSONAL COMPUTER MEMORY CARD INT-ERNATIONAL ASSOCIATION, personal computer memory card international association) interface, a USB (Universal Serial Bus, universal serial bus) interface, an EXPRESS34 interface, an EXPRESS54 interface, or a CF (CrossFire, cross fire) interface, and so on. In this embodiment, the plug 2 preferably uses the USB interface, because the USB interface is convenient for plugging, and has better versatility. Definitely, in this embodiment, the plug 2 may also be other interfaces that are capable of transmitting data and similar to the interfaces listed in the preceding.

In this embodiment, a wireless network access module 15 is disposed on the apparatus body 1 of the data card, and the wireless network access module 15 is configured to access an external network 16 through a wireless signal when the plug 2 is plugged into the slot 8 on the computer 7, so as to implement communication between the chip 9 of the computer 7 and the external network 16. The data card may be enabled to have a function of a wireless network card through the wireless network access module 15, and in this embodiment, the external network 16 may be the Internet, and may also be a local area network or other similar networks.

A shortcut operation module 17 and a shortcut power supply 71 for supplying power for the shortcut operation module 17 are disposed on the cap 3, where the shortcut operation module 17 is configured to send an instruction for controlling software of the computer 7 to the receiving module 6 through a wireless signal, and the receiving module 6 is configured to receive the instruction for controlling the software of the computer 7, input the instruction for controlling the software of the computer 7 into the chip 9 of the computer 7 through the plug 2 and the slot 8, and control the software on the computer 7 through the chip 9 of the computer 7. Definitely, in this embodiment, the shortcut operation module 17 may be supplied power by the shortcut power supply 71, and may also be supplied power by the mouse power supply 5 and/or the laser power supply 13. The shortcut power supply 71, the mouse power supply 5 and the laser power supply 13 may be the same power supply and the same battery.

The setting of the shortcut operation module 17 further extends the function of the data card, and the shortcut operation module 17 may enable the cap 3 to become an apparatus similar to a television remote control, and the user may control the software of the computer 7 through the shortcut operation module 17 more quickly and remotely. In this embodiment, a plurality of shortcut keys 89 as shown in FIG. 3 may be disposed on the cap 3, so as to respectively control different software, and a shape of the shortcut key 89 may be designed to be a shape similar to that of the left key 18 and the right key 19. Definitely, merely few shortcut keys 89 may also be disposed, or the left key 18 and the right key 19 may be used as the shortcut keys 89. At this time, a plurality of switchable modes may be set on the cap 3, and the shortcut keys 89 have different functions in different modes and may control different software. The software on the computer 7 includes one, two or more of the following: PPT, Office series software, audio playing software, video playing software, game software, and a Web browser. The preceding software is office or entertainment software in common use, which helps to improve the versatility of the data card provided in this embodiment of the present utility model.

In this embodiment, the mouse module 4 may send the instruction for moving the computer cursor position to the receiving module 6 through a wireless signal, and the wireless signal conforms to a 2.4G transmission technology standard or a Bluetooth technology standard. The wireless signal conforming to the 2.4G transmission technology standard may also be steadily transmitted over a distance that is greater than 10 meters, so that the user may perform control on the computer 7 in a remote place. The Bluetooth technology is a relatively mature wireless transmission technology. Definitely, in this embodiment, the wireless signal may also be transmitted by using other transmission technologies in addition to the 2.4G transmission technology and the Bluetooth technology.

Definitely, in this embodiment, the mouse module 4 may also be disposed on other accessories, devices (for example, an antenna connected with the apparatus in a removable manner) or components in addition to the cap 3, where the accessories, devices or components are similar to the cap 3.

The preceding descriptions are merely specific embodiments of the present utility model, but are not intended to limit the protection scope of the present utility model. Any modification or replacement easily thought of by persons skilled in the art without departing from the technical scope disclosed by the present utility model shall fall within the protection scope of the present utility model. Therefore, the protection scope of the present utility model shall be subject to the protection scope of the claims.

## Claims

1. A data card, comprising an apparatus body, a plug fixedly connected to the apparatus body, and a cap capable of being plugged into the plug, wherein the cap is disposed with a mouse module and a mouse power supply for supplying power for the mouse module, and the apparatus body is disposed with a receiving module;
the plug is capable of being plugged into an adapted slot for the plug on a computer, and the plug is electrically connected to a chip of the computer through the slot;
the mouse module is configured to sense and calculate a moving distance of a spatial position of the cap, convert the calculated moving distance of the spatial position of the cap into an instruction for moving a computer cursor position, and then send the instruction for moving the computer cursor position to the receiving module; and
the receiving module is electrically connected to the plug, and is configured to receive the instruction for moving the computer cursor position, input the instruction for moving the computer cursor position into the chip of the computer through the plug and the slot, and control a position of a cursor on a computer screen through the chip of the computer.

2. The data card according to claim 1, wherein the moving distance of the spatial position of the cap is a distance of the cap moving in any direction.

3. The data card according to claim 1, wherein the moving distance of the spatial position of the cap is a distance of the cap moving in a direction parallel to a horizontal plane.

4. The data card according to claim 1, wherein the cap comprises a cap header and a cap body that are fixedly connected to each other, the cap header is cylinder-shaped and is capable of being plugged into the plug, the cap body is hollow and a circuit board is disposed inside the cap body, and the mouse module is fixedly disposed on the circuit board.

5. The data card according to claim 1, wherein the cap is further disposed with a laser lamp that is capable of emitting a parallel beam, a laser power supply for supplying power for the laser lamp, and a switch for controlling whether the laser lamp is on or off.

6. The data card according to claim 5, wherein a wireless network access module is disposed on the apparatus body, and the wireless network access module is configured to access an external network through a wireless signal when the plug is plugged into the slot on the computer, so as to implement communication between the chip of the computer and the external network.

7. The data card according to claim 6, wherein a shortcut operation module and a shortcut power supply for supplying power for the shortcut operation module are disposed on the cap, and the shortcut operation module is configured to send an instruction for controlling software of the computer to the receiving module through a wireless signal; and
the receiving module is configured to receive the instruction for controlling the software of the computer, input the instruction for controlling the software of the computer into the chip of the computer through the plug and the slot, and control the software on the computer through the chip of the computer.

8. The data card according to claim 7, wherein the software on the computer comprises one, two or more of the following: PPT, Office series software, audio playing software, video playing software, game software, and a Web browser.

9. The data card according to any one of claims 1 to 8, wherein the mouse module sends the instruction for moving the computer cursor position to the receiving module through a wireless signal, and the wireless signal conforms to a 2.4G transmission technology standard or a Bluetooth technology standard.
